# EUROPEAN PATENT SPECIFICATION

(11) **EP 1 941 117 B1**
(45) Date of publication and mention of the grant of the patent: **27.06.2012**
(21) Application number: 06827031.3
(22) Date of filing: 27.10.2006
(51) Int. Cl.: E05B 65/00, F16L 13/00

(54) **SELF ASSEMBLING/QUICK ASSEMBLY STRUCTURE USING SHAPE MEMORY ALLOY MATERIALS**
SELBSTMONTIERENDE/SCHNELLMONTAGE-STRUKTUR MIT FORMSPEICHERLEGIERUNGSMATERIALIEN
STRUCTURE A AUTOASSEMBLAGE/MONTAGE RAPIDE UTILISANT DES MATERIAUX D'ALLIAGE A MEMOIRE DE FORME

(30) Priority: 28.10.2005 US 262494
(43) Date of publication of application: 09.07.2008
(60) Divisional application: 11194663.8
(73) Proprietor: Searete LLC, WA 98004 (US)
(72) Inventor: JUNG, Edward, K., Y., Bellevue, WA 98005-1403 (US); TEGREENE, Clarence, T., Bellevue, WA 98004 (US)
(74) Representative: Harris, Ian Richard
(86) International application number: PCT/US2006/042247
(87) International publication number: WO 2007/053530

(56) References cited:
- EP-A1- 0 034 500
- WO-A1-90/12237
- US-A- 4 934 743
- US-A1- 2002 032 443
- US-A1- 2005 172 462

## Description

### TECHNICAL FIELD

The present application relates, in general, to shape memory alloys and to fasteners.

WO 90/12237 corresponding to the preamble of independent product claim 1 or independent method claim 23 discloses a radially heat-recoverable, especially heat-shrinkable, sleeve used to impart an axial force to two objects. Axially facing surfaces of the sleeve coact with axially facing surfaces, one on each object. At least one, preferably both, of the surfaces of each of the pair of coacting surfaces is inclined to the axis of the objects. The sleeve may be used to form a mechanical connection between the objects.

### SUMMARY

The invention is defined in the independent claims. Additional features of the invention are disclosed in the dependent claims.

An embodiment provides an apparatus that includes a first piece, a stop, and an assembly that includes a shape memory alloy.

Embodiments of the invention are described with reference to Figures 1-5.

### BRIEF DESCRIPTION OF THE FIGURES

FIG. 1a shows a first embodiment of the apparatus in a first configuration.
FIG. 1b shows a first embodiment of the apparatus in a second configuration.
FIG. 2 shows a second embodiment of the apparatus.
FIG. 3a shows a third embodiment of the apparatus in a first configuration.
FIG. 3b shows a third embodiment of the apparatus in a second configuration.
FIG. 4 shows a first embodiment of the assembly.
FIG. 5 shows a second embodiment of the assembly.
FIG. 6 shows a different assembly.
FIG. 7 shows a different assembly.
FIGS. 8a-8f show different perspectives and configurations of an apparatus.
FIG. 9 is a diagrammatic representation of a key having local resistive regions.

### DETAILED DESCRIPTION

A shape memory alloy is a material that can change shape or attempt to change shape upon transfer (including loss or gain) of energy, such energy including thermal, electrical, magnetic, electromagnetic, mechanical, or a different form of energy. Properties of shape memory alloys are summarized in METALS HANDBOOK, Eds. J.R. Davis, Davis and Associates; Desk Edition, Second Edition; ASM International: Materials Park, OH, 1998; pp 668-669. Note that, in some contexts herein, shape memory alloy may respond to directly applied energy such as heat or may respond to indirectly provided energy, as may be the case for example where energy is provided via a magnetic field or through local heating from an applied current.

Shape memory alloys may be useful in the fabrication of a fastener, latch, or hinge, as described, for example, in U.S. Patent No. 6,889,411 entitled SHAPE MEMORY METAL LATCH HINGE DEPLOYMENT METHOD to Hinkley, et al.; U.S. Patent No. 6,875,931 entitled RETAINER FOR CIRCUIT BOARD ASSEMBLY AND METHOD FOR USING THE SAME to Combs, et al.; U.S. Patent No. 6,860,689 entitled FASTENING ASSEMBLIES AND COMPONENTS THEREOF to Attanasio; and U.S. Patent No. 6,840,700 entitled MECHANICAL CONNECTING ELEMENT to Nusskern, et al.

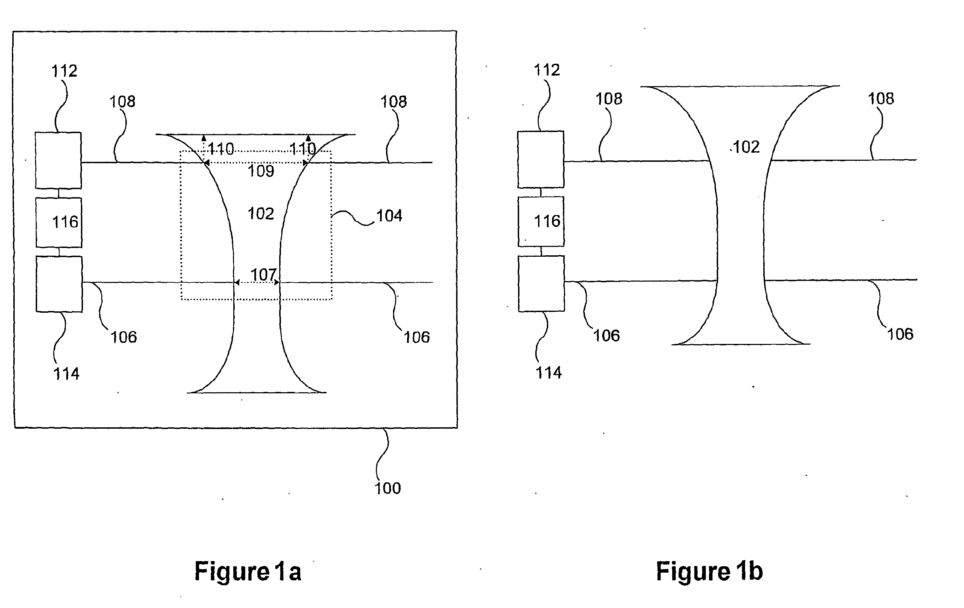

Figures 1a and 1b show the cross section of a first embodiment of an apparatus 100 where an assembly 108 includes a shape memory alloy that is configured proximate to a segment 104 of a first piece 102, where Figure 1a shows a first configuration and Figure 1b shows a different configuration of the same apparatus shown in Figure 1a. The assembly 108 may include an assembly aperture 109 that is large enough to allow the first piece 102 to pass.

The shape memory alloy may include NiTi, CuZnAl, CuAlNi, FeMnSi, or a different material having shape memory properties. As is described in W. H. Zou, C. W. H. Lam, C. Y. Chung, J. K. L. Lai, "Microstructural Studies of a Cu-Zn-Al Shape-Memory Alloy with Manganese and Zirconium Addition", Metallurgical and Materials Transactions A, Volume 29A, July 1998, 1865, materials may be added in order to improve the memory of the shape memory alloy. The transition temperatures of the material depends on the particular alloy, and may be tuned by varying the elemental ratios. The transition temperatures of the material may also depend on stresses applied to the material, and the material shape may vary according to varying stresses applied as is described in István Mihálcz, "Fundamental Characteristics and Design Method for Nickel-Titanium Shape Memory Alloy", Periodica Polytechnica Ser. Mech. Eng. Vol. 45, No. 1, PP. 75-86 (2001). In another aspect, the shape memory alloy may be a ferromagnetic shape memory alloy that may change shape in response to an applied magnetic field as well as to temperature and stress changes as in other shape memory alloys, as described in E. Cesari, J. Pons, R. Santamarta, C. Segui, V. A. Chernenko, "Ferromagnetic Shape Memory Alloys: An Overview", Archives of Metallurgy and Materials, Volume 49, Issue 4, 2004.

The assembly 108 is configured to transfer thermal, electrical, electromagnetic, or a different form of energy, in some cases to or from an energy bank 112. The energy bank 112 may be a circuit configured to exchange electrical energy with the assembly 108, an electromagnetic field, a material such as water that may be configured to exchange thermal energy with the assembly 108, a heat source or a heat sink, a magnetic field, or a different configuration designed to exchange energy with the assembly 108. In a relatively straightforward illustrative case, the energy bank may be a battery powered current source. The assembly 108, upon transfer of said energy, changes shape, causing the first piece 102 to move in a direction 110 relative to the assembly 108.

In the embodiment shown in Figures 1a and 1b, the first piece 102 is configured so that lateral dimensions of the assembly 108 in Figure 1a increase upon transfer of energy. The perimeter of the first piece 102 engages the assembly 108 non-perpendicularly. As the assembly 108 attempts to expand, force increases between the first piece 102 and the assembly 108. Because the engagement is non-perpendicular, the force includes a vector component that urges the first piece 102 in the direction 110. The stop 106 is configured with an aperture 107 having a size and location such that when the first piece 102 is urged in the direction 110, the perimeter of the first piece 102 engages with the perimeter of the stop 106, which limits the motion of the first piece 102 in the direction 110. In one embodiment, the first piece 102 may be mateable, and may be attached to, another object at a mounting site.

In one embodiment, the stop 106 may comprise a shape memory alloy such as those listed previously for the assembly 108, where the stop 106 may be configured to change shape to adjust the position of the first piece 102 relative to the stop 106. In this case the stop may be configured to transfer energy to or from an energy bank 114, where the energy bank 114 may include those listed as examples previously for the energy bank 112.

The energy banks 112, 114 may be controlled by a control system 116 that may establish the amount and timing of energy transfer. Further, the control system 116 may include a sensor to affect the amount of control signal, where the sensor may be an optical, force, pressure, resistance, or other type of sensor.

In one embodiment, Figures 1a and 1b show cross sections of an apparatus 100 having substantially circular symmetry where the apertures 107 and 109 are substantially round apertures. In other embodiments, Figures 1a and 1b show cross sections of an apparatus 100 that does not have circular symmetry. The assembly 108 comprises rods that are configured to increase in length to exert a force on the first piece 102, the stop 106 may comprise rods that are configured to change in length to control the position of the first piece 102.

Although the illustrative example of Figures 1a and 1b has the first piece 102 with an hourglass shape, one skilled in the art may extend the embodiment to other configurations, such as a substantially double-hourglass, or an even more complex shape potentially resembling a key structure, where the assembly 108 and the stop 106 may be positioned at a number of different places along the first piece 102. Further, the first piece 102 may have portions having substantially parallel sides, portions where the slope of the sides is substantially constant, or portions of the sides where the side is not smooth, for example to increase friction between the first piece 102 and the assembly 108 or the stop 106.

The illustrative example of Figures 1a and 1b has been described such that Figure 1a represents the rest state and Figure 1b represents a state achieved after energy transfer. However, the initial rest state and activated states may be reversed such that Figure 1b represents the rest state and Figure 1a represents a state achieved after energy transfer.

In some cases it may be desirable to increase the force between the assembly 108 and the first piece 102 and/or the force between the stop 106 and the first piece 102 after they have already made contact and are not in motion relative to each other. For example, in situations where it is desirable to maximize the force between the assembly 108 and the stop 106 and the first piece 102, energy may be supplied or withdrawn from the system to provide the desired amount of force. Further, the apparatus 100 may include one or more components or devices that may provide additional force or control, which may be a clamp, pliers, or other such device. Such components may provide mechanical gain or concentrate forces locally or provide other spatial distributions of force. In such approaches, mechanical structures allow the vector of force provided by the assembly 108 may be parallel to, opposite to, at an acute or obtuse angle relative to, or even perpendicular to the direction at which force is applied to the first piece.

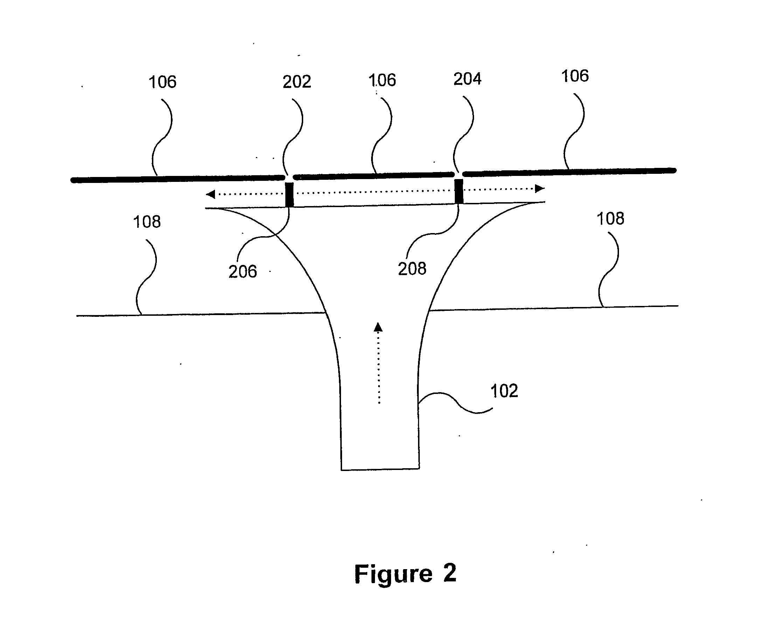

Figures 1a and 1b also show an exemplary embodiment of the stop 106 as including the stop aperture 107 that engages the periphery of the first piece 102, however other configurations may also limit the relative motion between the first piece 102 and the assembly 108. For example, as shown in Figure 2, the first piece 102 does not pass through the stop 106. In this embodiment, the stop 106 is shown as a substantially solid plane with apertures 202, 204 that accept protrusions 206, 208. The apertures 202, 204 are shown as being too small to allow the first piece 102 to pass. In still another approach, the stop 106 may include the protrusions 206, 208 and the assembly may include the apertures 202, 204. In another embodiment, the protrusions 206, 208 may engage a solid face of the stop 106 or may engage other structures configured to mate with the protrusions.

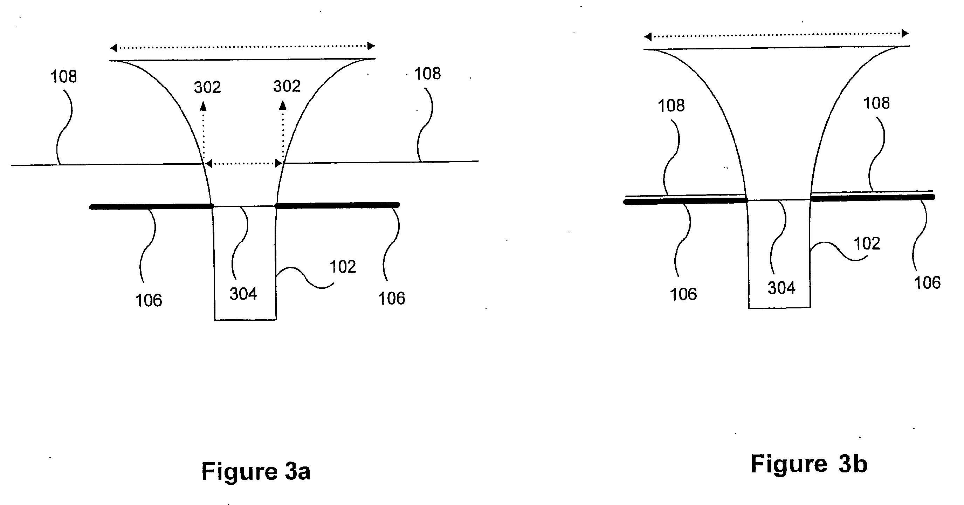

Figures 3a and 3b show another embodiment, where Figure 3a shows a first configuration and Figure 3b shows a different configuration of the same apparatus shown in Figure 3a. In Figures 3 a and 3b the stop 106 includes a rod 304 that passes through the first piece 102. In one embodiment, the rod may be permanently affixed to the first piece 102, and in another embodiment, the rod 304 may be configured to pass through the first piece 102. In this case, the rod 304 may comprise a shape memory alloy that may be configured to expand according to conditions. The assembly 108 is configured with a shape memory alloy that responds to input energy by expanding. The assembly 108 is shaped such that, as it expands it places a force on the first piece 102 urging the first piece 102 to move in a direction 302. The stop 106 limits motion of the first piece 102, such that the first piece 102 is held in place against the stop 106. Once again, as described with respect to Figures 1a and 1b, the selection of rest state and activated state can be reversed. Thus, Figure 3a may represent the activated state and Figure 3b may represent the rest state in some applications. The selection of which state to select as the rest or activated state can be a design choice depending upon the application.

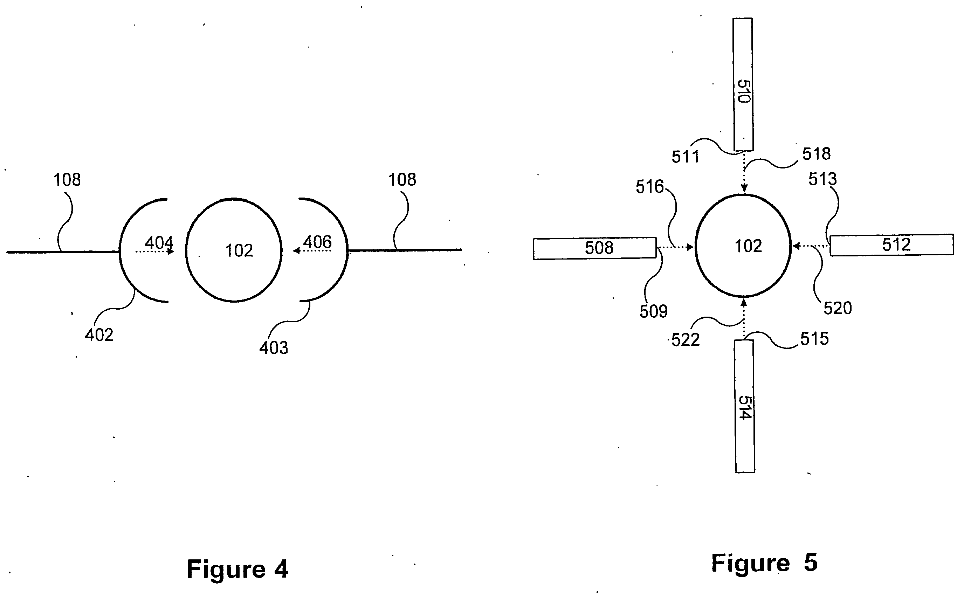

In an embodiment, a top view of which is shown in Figure 4, each of two assemblies 108 includes a respective handle 402, 403 at its distal end. The assemblies are responsive to input energy to move the handles 402, 403 toward each other in directions 404, 406 to grip the first piece 102.

While Figure 4 shows two handles 402, 403 being shaped as semicircles to grip the first piece 102, which, in this embodiment, has a substantially round cross-section, a variety of other configurations and shapes may be implemented. For example, other embodiments may have a different number of handles, handles of different shapes, other mating surfaces, or other geometrical placements of the assemblies. Further, the handles may be carried by the stop 106, or both the assembly 108 and the stop 106 may include handles.

In a similar embodiment, the top view of which is shown in Figure 5, the assembly 108 includes four arms 508, 510, 512, 514 having respective distal ends 509, 511, 513, 515 that are configured to move in directions 516, 518, 520, 522 responsive to input energy. As the distal ends move, they make contact with the first piece 102. Figure 5 shows four substantially rod-shaped arms 508, 510, 512, 514 configured to make contact with the first piece 102, which, in this embodiment, is round, but in other embodiments there may be a different number of arms and they may have a different shape. Further, the stop 106 may include arms similar to those in Figure 5, or both the assembly 108 and the stop 106 may include the arms.

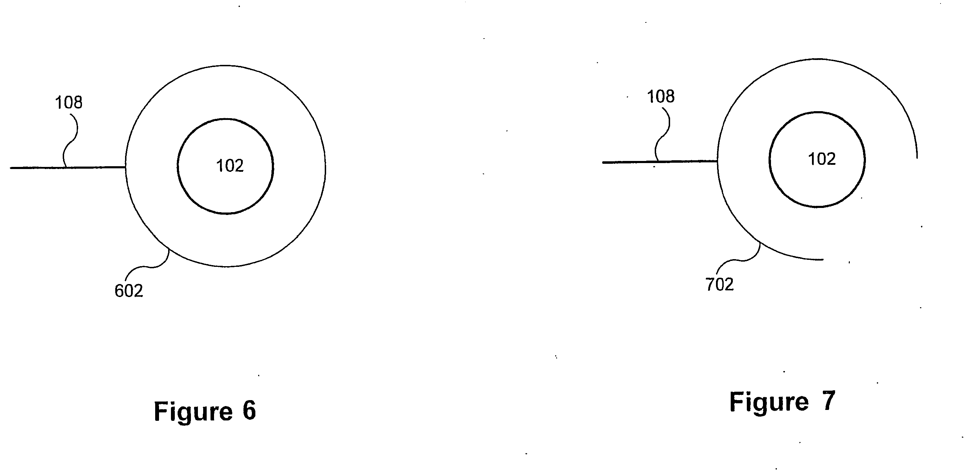

Figure 6 shows a different assembly 108 that includes an encircling portion 602 configured to tighten to make contact with the first piece 102, thereby acting as a cinch. Figure 6 shows one encircling portion 602 configured to make contact with the first piece 102 that is round, but the first piece 102 and the encircling portion 602 may have a different shape and may be substantially rectilinear or irregularly shaped. Further, the encircling portion 602 is shown in Figure 6 and entirely enclosing the first piece 102, however in some cases the encircling portion 602 may not completely enclose the first piece 102, as is the case in Figure 7. Moreover, while the inner surface of the encircling portion 602 is shown as smooth, the surface may be adapted to mate to the first piece 102. For example, the inner surface may include pins, teeth, serrations, bevels or other shapes and the first piece may include complementary features. Such features may increase retention strength in some applications.

Figure 7 shows a partially encircling portion, 702, configured to close around the first piece 102 in a grasping fashion. The examples shown in Figures 6 and 7 (as well as structures corresponding to embodiments of the invention) may be configured such that the encircling portion 602 and/or the partially encircling portion 702 may be substantially helical rather than confined to a single plane. Further, although Figures 6 and 7 show one encircling portion 602 and one partially encircling portion 702, the apparatus may comprise more than one encircling portion 602 or partially encircling portion 702. Further, although Figures 6 and 7 show the assembly 108 including an encircling portion 602 or partially encircling portion 702, the stop 106 may include an encircling portion 602 or partially encircling portion 702.

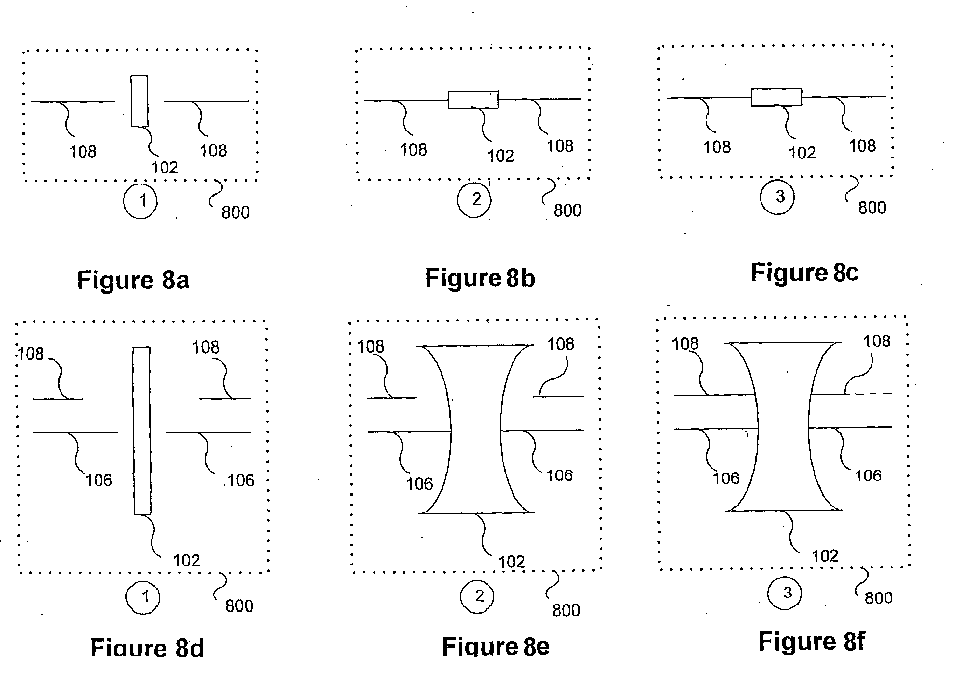

Figures 8a-f show the first piece 102 (the "key") as a structure sized and shaped to enter the apertures 107, 109, and the assembly 108 (which forms the "lock") is a structure configured with a shape memory alloy. In one state, the key 102 can turn to position it relative to the lock 108 and the stop 106 (which forms the "retainer"). Figures 8a, 8b, and 8c show top views of the apparatus 800 and Figures 8d, 8e, and 8f show side views of the apparatus 800. Figures 8a and 8d show the apparatus 800 after the key 102 has entered the apertures 107, 109. The Figures 8b and 8e show the apparatus 800 after the key 102 has been rotated relative to the lock 108 and the retainer 106. In Figures 8b and 8e, the apparatus 800 is shown with the key 102 and the retainer 106 in contact, however it may be that rotating the key 102 is not sufficient for the key 102 to make contact with the retainer 106, and the retainer 106 may be configured with a shape memory alloy configured to change in shape to make contact with the key 102 upon transfer of energy. Figures 8c and 8f show the apparatus 800 in the final "locked" position, where energy has been transferred to the lock 108 to change its shape such that it has made contact with the key 102.

While the representation of Figures 8a-f show a simple structure having rectangular and hourglass cross sections, other more complex structures can be implemented as well. For example, the key 102 may include a series of indentations and projections of various sizes, shapes and depths, rather than an hourglass shape. Further, the key 102 may comprise a shape memory alloy, where the height or depth of the respective indentations or projections would be a function of the energy input to the key. The corresponding lock 108 would then include a number of surfaces that mate to corresponding indentations and projections. The configuration may or may not include the retainer 106. In a simple implementation, each of the mating surfaces is at a distal end of a respective pin. For a given energy input, the heights and depths of the respective indentations and projections correspond to a key structure that will drive the pins to the proper position to permit the key to turn to a second position, as in a conventional lock.

In one embodiment, opening the lock involves rotating the key 102 from the second position to a third position. However, the depths and heights of the indentations and the projections to rotate from the second position to the third position are different from those to rotate from the input orientation to the second position.

To establish the new depths and heights, a new level of input energy is applied to the key. Local regions, or in a simple case, the entire key, expand or contract, to set new depths and heights. At a selected temperature or other energy state, the new depths and heights correspond to the depths and heights that permit the key to turn from the second position to the third position.

While input energy at two positions has been described, the process can be extended to establish three or more sets of depths and heights. Moreover, the key 102 may be configured to rotate from the initial position to the second position, the second position to the third position or other stages at the rest state. Further, energy states may be repeated in some cases. For example, rotation from the initial position to the second position and from the third position to a fourth position may both be established at the rest state.

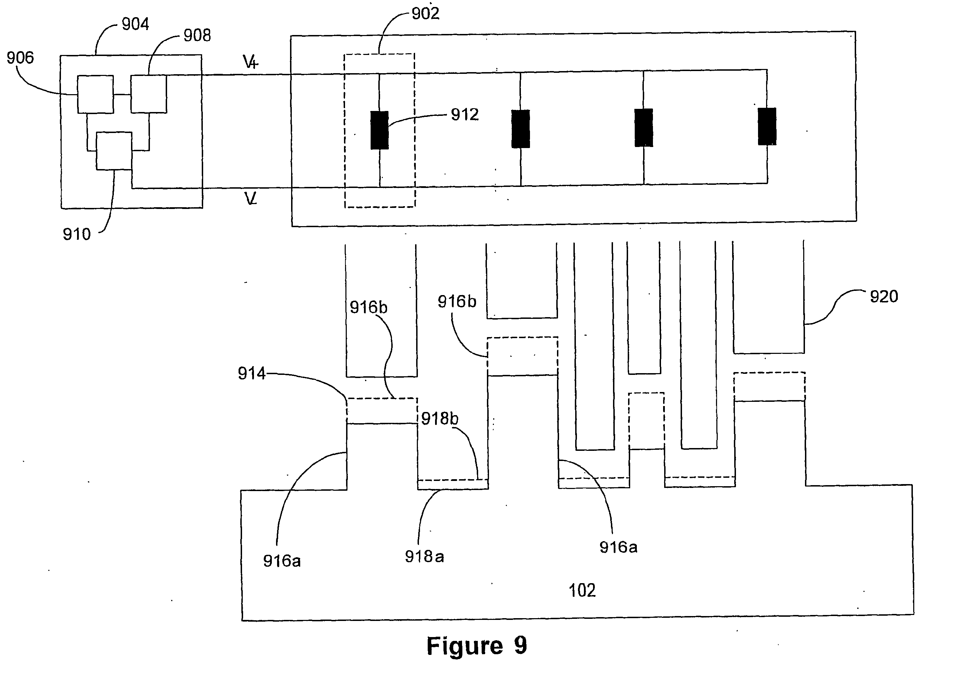

Also, as noted above, the key may include a plurality of regions that may each receive a respective energy input different from those of the other regions. As shown in Figure 9, the key 102 may include a set ofN sections 902 proximate to respective projections 916a and indentations 918a, where the section 902 and its corresponding projection 916a and/or indentation 918a form a region of the key. Each section 902 is electrically coupled to a power source 904, that may include a battery 906, microprocessor 908, and/or other electrical circuitry 910. The regions 916a may be substantially isolated from each other, electrically and/or thermally. For example, where the input energy is electrical energy insulative gaps or barriers may provide electrical isolation. The regions may also be electrically insulated from the main portion of the key.

In one approach, the power source 904 provides energy input in the form of an electrical current having a respective amplitude that heats a resistive segment 912 at each respective region 902 to provide localized heating. The amount of heating energy may be established by controlling the current and/or by the magnitude of the local resistance.

The energy input may be a DC input, such as may be applied by a battery, other DC source, or AC source having a substantially constant amplitude. The voltage applied can be defined through a variable resistance or similar structure for regulating voltages. Where the input is DC or constant amplitude AC, the relative current, and thus the amount of resistive heating at each region 902 is established by the relative magnitudes of the resistances 912. As represented by the broken line 914 in Figure 9, segments of the key 102 expand differentially corresponding to the amount of local heat energy to establish a new set of projections 916b and indentations 918b.

In use, the first set of projections 916a and indentations 918a engage pins 920 or other typical lock features. If the heights and depths of the projections 916a and indentations 918a correspond to the proper pin locations, the lock (main body not shown) permits rotation from an initial position to a second position. Note that the pins 920 are shown slightly separated from the projections 916a and indentations 918a for clarity of presentation, although in operation, the pins 920 would typically contact the projections 916a and indentations 918b.

After rotation to the second position, the power source 904 provides energy and the key 102 assumes the shape represented by the broken line 914 to establish the new set of projections 916b and indentations 918b. The new set of projections 916b and indentations 918b engages a second set of pins (not shown). Once again if the heights and depths of the projections 916b and indentations 918b correspond to the proper pin positions, the key can rotate to a third position. As noted previously, in some embodiments, a larger number of rotational positions and energy levels can be established to provide even more control.

Note that although the structures in Figures 8a-9 are described herein as a key and a lock, other structures that provide interactive activation may also be implemented. For example, the structure corresponding to the lock may be an electrical switch, such as an automobile ignition switch or a secure activation switch for an electrical device. Similarly, the structure corresponding to the lock may be a release mechanism having features similar to or dissimilar to a lock.

In some applications, the approaches shown herein may be implemented at very small scales, for example on the micron scale or even smaller. For example, a 150 µm shape memory alloy is described in H. B. Brown, Jr., J. M. Vande Weghe, C. A. Bererton, and P. K. Khosla, "Millibot Trains for Enhanced Mobility", IEEE/ASME Transactions on Mechatronics, Volume 7, Number 4, December 2002.

The embodiments described singularly may also be configured in arrays where multiple apparatuses are employed. The apparatuses may be connected to individual circuits and each controlled separately, or they may be connected to a common circuit and controlled simultaneously. In this case, they may all transfer substantially the same amount of energy or they may transfer different amounts of energy. The energy transferred to or from the apparatuses may be controlled by a computer or by another apparatus. Further, the apparatuses may be configured in such a way that they must be assembled in a certain order, in which energy may be transferred to or from the apparatuses in this order.

Although the embodiments are generally described as having a rest state where the assembly 108 and the stop 106 are not engaged with the first piece 102, it may be that for any of the embodiments the assembly 108 and/or the stop 106 are engaged with the first piece 102 in the rest state, and may be configured to become disengaged upon transfer of energy.

Although only the embodiment shown in Figures 1a and 1b include energy banks 112 and 114 and a control system 116, one or more energy banks or their equivalent and a control system may be included in any of the embodiments. Such control system may include electrical circuitry that establishes the amount, location, or other features of the input energy. Additionally, such electrical circuitry may interact with forms of feedback, such as sensing rotation of a lock, local temperature, absolute or relative movement of objects, or other aspects, to provide additional control of various aspects of operation.

The apparatus described above may have a variety of applications. For example, it may be configured as a fastener in a variety of environments, including for quick-assembling furniture. It may also be used in situations where it is desirable to assemble and dissemble something quickly, such as in assembly line operations. In this configuration, something such as a circuit board may pass to a position on an assembly line to a position where the board is to be worked on, and the apparatus may be used to keep the board in a fixed position during this operation. Further, the apparatus may be useful in situations where a fastener is needed and electrical energy or another form of energy is more easily supplied to the apparatus than mechanical energy. It may be used in situations where two parts assemble and dissemble frequently and quick assembly or dissembly is desired, such as on skis. It may be used as a connector in places that are difficult to access such as for braces on teeth or within a body. Or, it may be included in a lock and key configuration, where turning a key creates an electrical connection which assembles or dissembles the apparatus. The apparatus may be incorporated in toys that are configured to be assembled by the user, or the apparatus may be included in the design of a toy similar to legos.

## Claims

1. An apparatus comprising:
a first piece (102), an assembly (108) and a stop (106), wherein:
the first piece has an axis, a segment (104) having a sloped portion that is not parallel to the axis and a stop engagement portion;
the assembly is configured to engage the segment, the assembly including a first shape memory alloy responsive to an energy transfer to apply a force to the segment along transverse direction at a nonzero angle relative to the axis, the segment being shaped to urge the first piece along a selected path in a first direction (110) substantially parallel to the axis responsive to the transverse force whereby the stop engagement section is urged toward the stop; and
the stop is positioned to limit movement of the first piece along the selected path by engagement with the stop engagement portion of the first piece, **characterised in that**
the assembly comprises at least one rod including the first shape memory alloy responsive to the energy transfer to apply the force to the segment along the transverse direction at the nonzero angle relative to the axis.

2. The apparatus of claim 1 wherein the stop is located axially relative to the segment.

3. The apparatus of Claim 1 wherein the first shape memory alloy comprises:
NiTi;
CuZnAl;
CuAlNi;
FeMnSi; or
a ferromagnetic shape memory alloy.

4. The apparatus of Claim 1 wherein the stop comprises a second shape memory alloy responsive to an energy transfer.

5. The apparatus of Claim 4 wherein the second shape memory alloy comprises NiTi.

6. The apparatus of Claim 1 wherein the first shape memory alloy is responsive to an energy transfer of:
thermal energy;
electrical energy;
magnetic energy;
electromagnetic energy; or
mechanical energy.

7. The apparatus of Claim 1 wherein the assembly is configured to deform responsive to an energy transfer.

8. The apparatus of Claim 1 wherein the assembly substantially surrounds the segment.

9. The apparatus of Claim 8 wherein the assembly includes at least one of:
a substantially ring shaped portion; or
a substantially coiled portion.

10. The apparatus of Claim 1 wherein the apparatus includes a portion having substantially circular symmetry.

11. The apparatus of Claim 10 wherein the first piece has substantially circular symmetry.

12. The apparatus of Claim 1 wherein the rod is configured to make contact with the first piece.

13. The apparatus of claim 12 wherein the rod includes a handle (402,402) configured to make contact with the first piece.

14. The apparatus of Claim 13 wherein the handle is configured to substantially surround the first piece.

15. The apparatus of Claim 1 wherein the stop is configured to limit the motion of the first piece.

16. The apparatus of Claim 1 wherein the assembly and the stop are in intimate contact.

17. The apparatus of Claim 1 wherein the position of the stop is substantially fixed with respect to the assembly.

18. The apparatus of Claim 1 wherein the stop includes an aperture configured to receive a portion of the first piece.

19. The apparatus of Claim 1 wherein the first piece includes an aperture, and wherein the stop includes a rod configured to pass through the aperture.

20. The apparatus of Claim 19 wherein the rod of the stop comprises a second shape memory alloy.

21. The apparatus of Claim 1 wherein the apparatus is configured in an array.

22. The apparatus of Claim 1 wherein the rod is configured to increase in size responsive to an energy transfer.

23. A method comprising:
transferring energy to an assembly (108), the assembly including a first shape memory alloy;
responsive the energy transfer, the assembly applying a force to a segment (104) of a first piece (102) along transverse direction at a nonzero angle relative to an taxis of the first piece, the segment having a sloped portion that is not parallel to the axis shaped to urge the first piece along a selected path in a first direction (110) substantially parallel to the axis; and
limiting movement of the first piece along the selected path by engagement of a stop engagement portion of the first piece with a stop (106), **characterised in that**
the assembly comprises at least one rod including the first shape memory alloy responsive to the energy transfer to apply the force to the segment along the transverse direction at the nonzero angle relative to the axis.

## Patentansprüche

1. Vorrichtung mit:
einem ersten Teil (102), einer Anordnung (108) und einem Anschlag (106), wobei
das erste Teil eine Achse, ein Segment (104) mit einem geneigten Abschnitt, der nicht parallel zu der Achse ist, und einen Anschlageingriffabschnitt aufweist,
die Anordnung so eingerichtet ist, dass sie mit dem Segment in Eingriff kommt, wobei die Anordnung eine erste Formspeicherlegierung aufweist, die auf eine Energieübertragung so reagiert, dass sie eine Kraft auf das Segment entlang einer Querrichtung unter einem von Null verschiedenen Winkel relativ zu der Achse ausübt, wobei das Segment so geformt ist, dass es als Reaktion auf die Querkraft das erste Stück entlang einem ausgewählten Pfad in einer ersten im Wesentlichen zu der Achse parallelen Richtung (110) bewegt, wodurch der Anschlageingriffsabschnitt hin zu dem Anschlag bewegt wird, und
der Anschlag so angeordnet ist, dass er eine Bewegung des ersten Teils entlang dem ausgewählten Pfad durch Eingriff mit dem Anschlageingriffabschnitt des ersten Teils begrenzt, **dadurch gekennzeichnet, dass**
die Anordnung mindestens einen Stab aufweist, der die erste Formspeicherlegierung umfasst, die auf die Energieübertragung so reagiert, dass sie die Kraft auf das Segment entlang der Querrichtung unter dem von Null verschiedenen Winkel relativ zu der Achse ausübt.

2. Vorrichtung nach Anspruch 1, wobei der Anschlag axial relativ zu dem Segment angeordnet ist.

3. Vorrichtung nach Anspruch 1, wobei die erste Formspeicherlegierung aufweist:
NiTi,
CuZnAl,
CuAlNi,
FeMnSi oder
eine ferromagnetische Formspeicherlegierung.

4. Vorrichtung nach Anspruch 1, wobei der Anschlag eine zweite Formspeicherlegierung, die auf eine Energieübertragung reagiert, aufweist.

5. Vorrichtung nach Anspruch 4, wobei die zweite Formspeicherlegierung NiTi aufweist.

6. Vorrichtung nach Anspruch 1, wobei die erste Formspeicherlegierung auf eine Energieübertragung von
thermischer Energie,
elektrischer Energie,
magnetischer Energie,
elektromagnetischer Energie oder
mechanischer Energie reagiert.

7. Vorrichtung nach Anspruch 1, wobei die Anordnung so eingerichtet ist, dass sie sich als Reaktion auf eine Energieübertragung verformt.

8. Vorrichtung nach Anspruch 1, wobei die Anordnung im Wesentlichen das Segment umgibt.

9. Vorrichtung nach Anspruch 8, wobei die Anordnung mindestens eines der folgenden umfasst:
einen im Wesentlichen ringförmigen Abschnitt oder
einen im Wesentlichen aufgewickelten Abschnitt.

10. Vorrichtung nach Anspruch 1, wobei die Vorrichtung einen Abschnitt mit im Wesentlichen kreisförmiger Symmetrie aufweist.

11. Vorrichtung nach Anspruch 10, wobei das erste Teil eine im Wesentlichen kreisförmige Symmetrie aufweist.

12. Vorrichtung nach Anspruch 1, wobei der Stab so eingerichtet ist, dass er mit dem ersten Teil in Kontakt kommt.

13. Vorrichtung nach Anspruch 12, wobei der Stab einen Handgriff (402, 402) aufweist, der so eingerichtet ist, dass er mit dem ersten Teil in Kontakt kommt.

14. Vorrichtung nach Anspruch 13, wobei der Handgriff so eingerichtet ist, dass er im Wesentlichen das erste Teil umgibt.

15. Vorrichtung nach Anspruch 1, wobei der Anschlag so eingerichtet ist, dass er die Bewegung des ersten Teils begrenzt.

16. Vorrichtung nach Anspruch 1, wobei die Anordnung und der Anschlag in engem Kontakt sind.

17. Vorrichtung nach Anspruch 1, wobei die Position des Anschlags im Wesentlichen in Bezug auf die Anordnung fixiert ist.

18. Vorrichtung nach Anspruch 1, wobei der Anschlag eine Öffnung aufweist, die so eingerichtet ist, dass sie einen Abschnitt des ersten Teils aufnimmt.

19. Vorrichtung nach Anspruch 1, wobei das erste Teil eine Öffnung aufweist und wobei der Anschlag einen Stab aufweist, der durch die Öffnung passt.

20. Vorrichtung nach Anspruch 19, wobei der Stab des Anschlags eine zweite Formspeicherlegierung aufweist.

21. Vorrichtung nach Anspruch 1, wobei die Vorrichtung in einem Array angeordnet ist.

22. Vorrichtung nach Anspruch 1, wobei der Stab so eingerichtet ist, dass er seine Größe als Reaktion auf eine Energieübertragung vergrößert.

23. Verfahren mit:
Übertragen von Energie auf eine Anordnung (108), wobei die Anordnung eine erste Formspeicherlegierung aufweist,
als Reaktion auf die Energieübertragung Ausüben einer Kraft von der Anordnung auf ein Segment (104) eines ersten Teils (102) entlang einer Querrichtung unter einem von Null verschiedenen Winkel relativ zu einer Achse des ersten Teils, wobei das Segment einen geneigten Abschnitt aufweist, der nicht parallel zu der Achse ist, der so geformt ist, dass er das erste Teil entlang einem ausgewählten Pfad in einer ersten Richtung (110) im Wesentlichen parallel zu der Achse bewegt, und
Begrenzen einer Bewegung des ersten Teils entlang dem ausgewählten Pfad durch in Eingriff bringen eines Anschlageingriffabschnitts des ersten Teils mit einem Anschlag (106), **dadurch gekennzeichnet, dass**
die Anordnung mindestens einen Stab aufweist, der die erste Formspeicherlegierung umfasst, die als Reaktion auf die Energieübertragung die Kraft auf das Segment entlang der Querrichtung unter einem von Null verschiedenen Winkel relativ zu der Achse ausübt.

## Revendications

1. Appareil comprenant :
une première pièce (102), un assemblage (108) et une butée (106), dans lequel :
la première pièce a un axe, un segment (104) ayant une partie inclinée qui n'est pas parallèle à l'axe et une partie de mise en prise de butée ;
l'assemblage est configuré pour mettre en prise le segment, l'assemblage comprenant un premier alliage à mémoire de forme sensible à un transfert d'énergie pour appliquer une force sur le segment le long de la direction transversale selon un angle non nul par rapport à l'axe, le segment étant formé pour pousser la première pièce le long d'une trajectoire sélectionnée dans une première direction (110) sensiblement parallèle à l'axe sensible à la force transversale, moyennant quoi la section de mise en prise de butée est poussée vers la butée ; et
la butée est positionnée pour limiter le mouvement de la première pièce le long de la trajectoire sélectionnée par la mise en prise avec la partie de mise en prise de butée de la première pièce, **caractérisé en ce que** :
l'assemblage comprend au moins une tige comprenant le premier alliage à mémoire de forme sensible au transfert d'énergie pour appliquer la force sur le segment le long de la direction transversale selon l'angle non nul par rapport à l'axe.

2. Appareil selon la revendication 1, dans lequel la butée est positionnée de manière axiale par rapport au segment.

3. Appareil selon la revendication 1, dans lequel le premier alliage à mémoire de forme comprend :
NiTi ;
CuZnAl ;
CuAlNi ;
FeMnSi ; ou
un alliage à mémoire de forme ferromagnétique.

4. Appareil selon la revendication 1, dans lequel la butée comprend un deuxième alliage à mémoire de forme sensible à un transfert d'énergie.

5. Appareil selon la revendication 4, dans lequel le deuxième alliage à mémoire de forme comprend du NiTi.

6. Appareil selon la revendication 1, dans lequel le premier alliage à mémoire de forme est sensible à un transfert d'énergie de :
énergie thermique ;
énergie électrique ;
énergie magnétique ;
énergie électromagnétique ; ou
énergie mécanique.

7. Appareil selon la revendication 1, dans lequel l'assemblage est configuré pour se déformer en réponse à un transfert d'énergie.

8. Appareil selon la revendication 1, dans lequel l'assemblage entoure sensiblement le segment.

9. Appareil selon la revendication 8, dans lequel l'assemblage comprend au moins l'une parmi :
une partie de forme sensiblement annulaire ; ou
une partie de forme sensiblement hélicoïdale.

10. Appareil selon la revendication 1, dans lequel l'appareil comprend une partie ayant une symétrie sensiblement circulaire.

11. Appareil selon la revendication 10, dans lequel la première pièce a une symétrie sensiblement circulaire.

12. Appareil selon la revendication 1, dans lequel la tige est configurée pour établir le contact avec la première pièce.

13. Appareil selon la revendication 12, dans lequel la tige comprend une poignée (402, 402) configurée pour établir le contact avec la première pièce.

14. Appareil selon la revendication 13, dans lequel la poignée est configurée pour entourer sensiblement la première pièce.

15. Appareil selon la revendication 1, dans lequel la butée est configurée pour limiter le mouvement de la première pièce.

16. Appareil selon la revendication 1, dans lequel l'assemblage et la butée sont en contact immédiat.

17. Appareil selon la revendication 1, dans lequel la position de la butée est sensiblement fixe par rapport à l'assemblage.

18. Appareil selon la revendication 1, dans lequel la butée comprend une ouverture configurée pour recevoir une partie de la première pièce.

19. Appareil selon la revendication 1, dans lequel la première pièce comprend une ouverture, et dans lequel la butée comprend une tige configurée pour passer à travers l'ouverture.

20. Appareil selon la revendication 19, dans lequel la tige de la butée comprend un deuxième alliage à mémoire de forme.

21. Appareil selon la revendication 1, dans lequel l'appareil est configuré en matrice.

22. Appareil selon la revendication 1, dans lequel la tige est configurée pour augmenter du point de vue de la taille en réponse à un transfert d'énergie.

23. Procédé comprenant les étapes consistant à :
transférer l'énergie à un assemblage (108), l'assemblage comprenant un premier alliage à mémoire de forme ;
en réponse au transfert d'énergie, l'assemblage applique une force sur un segment (104) d'une première pièce (102) le long de la direction transversale selon un angle non nul par rapport à un axe de la première pièce, le segment ayant une partie inclinée qui n'est pas parallèle à l'axe formé pour pousser la première pièce le long d'une trajectoire sélectionnée dans une première direction (110) sensiblement parallèle à l'axe ; et
limiter le mouvement de la première pièce le long de la trajectoire sélectionnée par la mise en prise d'une partie de mise en prise de butée de la première pièce avec une butée (106), **caractérisé en ce que** :
l'assemblage comprend au moins une tige comprenant le premier alliage à mémoire de forme sensible au transfert d'énergie pour appliquer la force sur le segment le long de la direction transversale selon l'angle non nul par rapport à l'axe.
